# EUROPEAN PATENT SPECIFICATION

(11) **EP 4 353 529 B1**
(45) Date of publication and mention of the grant of the patent: **15.04.2026**
(21) Application number: 23203600.4
(22) Date of filing: 13.10.2023
(51) Int. Cl.: B60N 2/28

(54) **CAR SEAT SYSTEMS**
FAHRZEUGSITZSYSTEME
SYSTÈMES DE SIÈGE DE VOITURE

(30) Priority: 13.10.2022 GB 202215158
(43) Date of publication of application: 17.04.2024
(73) Proprietor: Icandy World Limited, Bedfordshire SG18 8UB (GB)
(72) Inventor: Walker, Paul, Biggleswade, SG18 8UB (GB); Griffiths, Ryan, Biggleswade, SG18 8UB (GB); Barker, Derrick, Pershore, WR10 2NU (GB); Carter, Chris, Pershore, WR10 2NU (GB); Chick, Greg, Pershore, WR10 2NU (GB)
(74) Representative: Barker Brettell LLP

(56) References cited:
- EP-A1- 3 798 049
- EP-B1- 2 616 271

## Description

This invention relates generally to car seats, and more particularly, a car seat system including a base on which a car seat may be detachably mounted.

There are many known systems for mounting a car seat in a vehicle. The patent EP 2 616 271 B1 shows an example of a car seat system of the prior art. Car seat systems having a separate base and car seat have been designed to allow parents to secure their infant or toddler car seat in the car easily and safely, without the need to carry the entire apparatus once the car seat is removed from the car.

There is a continuing move towards improved safety in car seat systems for infants and young children. Several systems have been designed for improving crash resistance, however additional safety features often result in bulkier or heavier car seats, making removal of the car seat from the vehicle and subsequent carriage of the car seat more difficult for the user.

It is an object of the invention to provide a system having improved crash resistance, whilst allowing for ergonomic use.

The invention providess a car seat system comprising the technical features set forth in claim 1.

As such, the annular member can serve to absorb energy in the case of a crash, thus improving the crash resistance of the car seat system as a whole. It can also allow a reduction in the amount of material required to form the car seat, as the annular member can provide some of the crash protection that would otherwise be provided by the car seat itself. This means that the car seat can be lighter and so easier to carry, as well as potentially being cheaper to make.

The annular member may surround the car seat when it is received within the void. The annular member may comprise a circumference with the annular member being supported on the support part only by a plurality of supports spaced around the circumference. There may be precisely two supports.

The connection means may define a forwards/backwards direction of the car seat; the annular member may have two extremes in the forwards/backwards direction, with a support being provided at each extreme. This provides extra strength in respect of collisions along the forwards/backwards direction (such as rear end shunts, a common form of crash).

The annular member may be curved between the supports, and may be shaped as sections of an ellipse or circle. Doing so allows the annular member to absorb energy in a crash situation, as a curved member will resist any force perpendicular to it from the exterior of the curve.

The lower part may lie in a first plane, and the annular member may lie in a second plane. The first plane may form a non-zero angle with the second plane; the angle may be at least 5, 10 or 15 degrees.

The connection means may comprise at least one protrusion arranged to align the car seat in the void. The connection means may be located on the at least one protrusion.

The upper part is rotatably mounted on the lower part; this allows the car seat to be rotated to a convenient position (e.g., facing a door of the vehicle in which it is mounted) before the car seat is removed from the base.

The lower part of the base may comprise means for securing the base within the vehicle. The lower part of the base may comprise means for securing the base into the vehicle using the vehicle safety belt fixings. Alternatively, the lower part of the base may comprise ISOFIX arms. The lower part of the base may comprise a support leg. The lower part of the base may preferably comprise ISOFIX arms and a support leg. In some preferred embodiments the base may be secured inside the vehicle by fixing into ISOFIX anchor points inside the car, with the infant or child car seat then attaching to the base.

The car seat comprises securing means engaged with the connection means. For example, the securing means may comprise a bar and the connection means may comprise a catch, with the bar being received within the catch.

The connection means of the upper part of the base are configured so that upon engagement with the securing means of the car seat, the car seat is locked in a fixed position within the void of the upper part of the base. This position is such that there is a gap between the annular member and the car seat; typically, this gap will be at least 5mm, 10mm, 20mm or 30mm.

The upper part of the base may comprise positioning projections adapted for alignment with an installation channel of the car seat. The positioning projections may be configured such that alignment within the installation channel of the car seat enables the user to guide the car seat into the correct position within the upper part of the base to enable the car seat to be locked in the affixed position via engagement of the connection means of the base with the securing means of the car seat.

The lower part of the base may comprise any suitable means for securing the base within the vehicle. The lower part of the base may comprise means for securing the base into the vehicle using the vehicle safety belt fixings. Alternatively, the lower part of the base may comprise ISOFIX arms. The lower part of the base may comprise a support leg. The lower part of the base may preferably comprise ISOFIX arms and a support leg. In some preferred embodiments the base may be secured inside the vehicle by fixing into ISOFIX anchor points inside the car, with the infant or child car seat then attaching to the base.

A preferred embodiment of the invention provides a car seat kit, comprising at least two car seats each having securing means and a base in accordance with the invention, in which the securing means of each car seats can engage the connection means of the base, and in which the car seats are for different-sized children.

For example, one car seat could be for children of from birth up to 10 or 13 kg, and another car seat could be for children from 9 kg to 18 or 36 kg.

As such, this allows the same base to be used with car seats for children of different sizes.

There now follows, by way of example only, description of an embodiment of the invention described with reference to the accompanying drawings, in which:
FIG. 1 is a perspective view of a base for a car seat according to an embodiment of the invention;
FIG. 2 is a side view of the base of Figure 1;
FIG. 3 is a rear perspective view of an infant car seat installed in the base of Figure 1;
FIG. 4 is a side view of the base and car seat of Figure 3;
FIG. 5 is a perspective view of a toddler car seat for use with the embodiment of Figure 1; and
FIG. 6 is a perspective view of the toddler car seat of Figure 5 installed in the base of Figure 1.

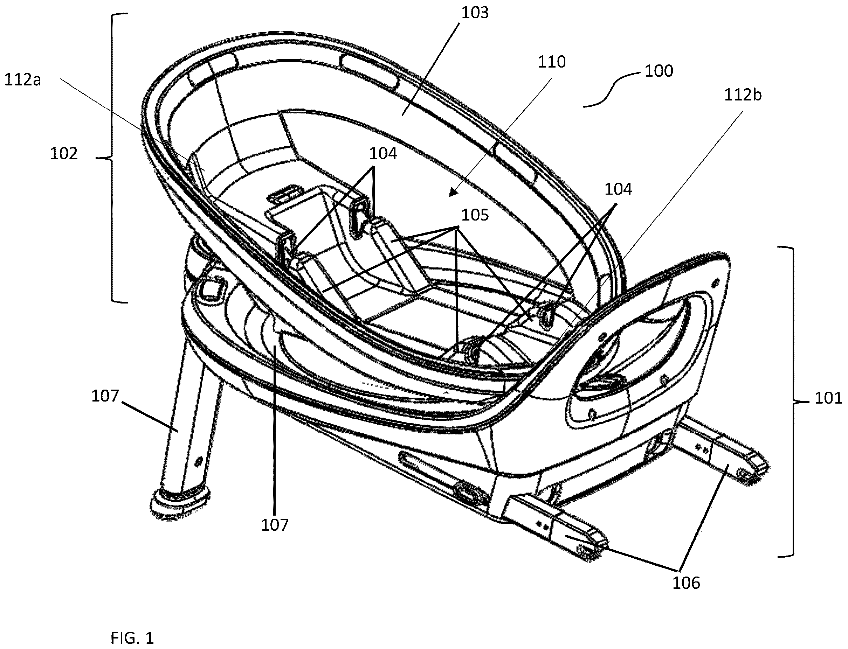

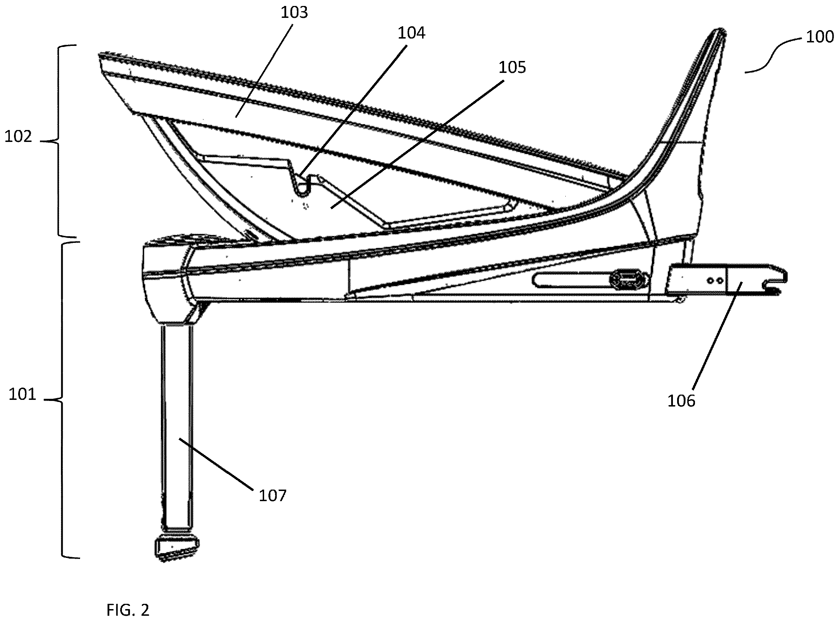

As shown in figures 1 and 2 of the accompanying drawings, the base 100 comprises a lower part 101 and an upper part 102 rotatably mounted to the lower part 101, wherein the upper part 102 is shaped to define a void 110 in which a car seat can be received. The upper part 102 comprises an annular member 103 surrounding the void and connection means 104 adapted for engagement with a securing means of the car seat.

The annular member is generally elliptical in outline and is supported on supports 112a, 112b at the front and rear of the upper part 102 along the long (major) axis of the ellipse. It is otherwise unsupported.

The annular member 103 is tilted with respect to the horizontal base by approximately 15 degrees.

In this embodiment, the base comprises two pairs of connection means 104 and two pairs of positioning projections 105 upon which the connection means 104 are located. The lower part 101 of the base 100 comprises ISOFIX arms 106 and a support leg 107. The lower part 101 further comprises a rotatable platform 108 upon which the upper part 102 is mounted.

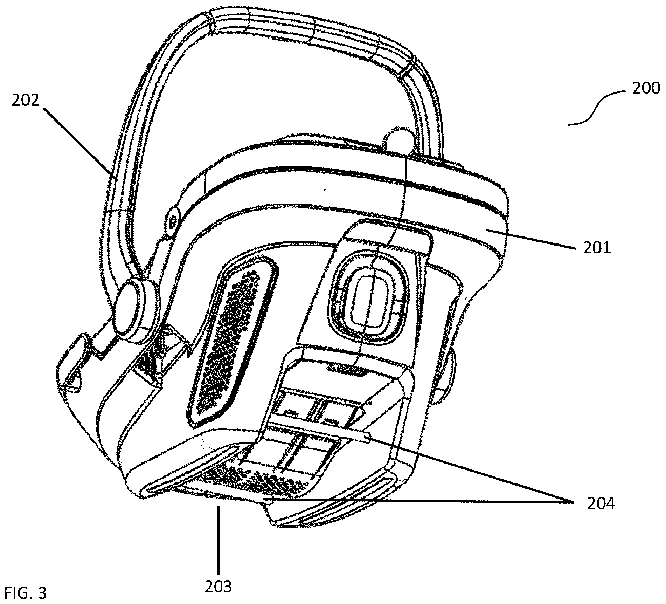

Figure 3 shows a car seat 200 for use with the base 100. The car seat 200 comprises a seat body 201 and a restraining bar 202. The seat body 201 comprises an installation channel 203 in which securing means 204 are located. This car seat is an infant child seat (Group 0 or 0+, for a child up to 10 or 13 kg).

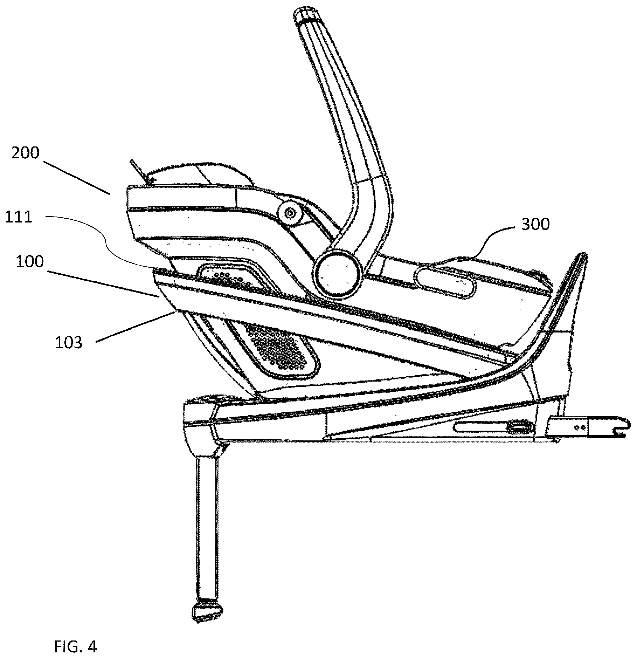

Figure 4 shows the car seat 200 installed in the base 100. It can be seen that the annular member 103 surrounds the car seat 200 although there is a gap 111 between the car seat 200 and the annular member 103 to allow the annular member 103 to flex.

Thus, should the vehicle carrying the car seat be in a crash, the kinetic energy of the car seat and its occupant will first be absorbed by the annular member 103 flexing. As the annular member is curved, it will resist any force perpendicular to it externally to the curve, such as being impacted from any side. Because those initial forces are absorbed by the annular member 103, there is less kinetic energy to dissipate and less force to resist for the car seat 200 itself. This means that the overall crash safety of the car seat in the base can be improved, and the required resistance to crashes of the car seat can be reduced, potentially meaning that it can be made lighter.

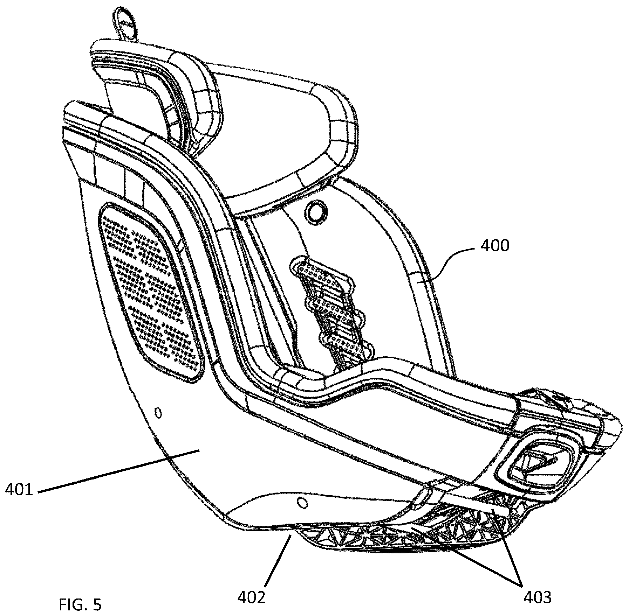

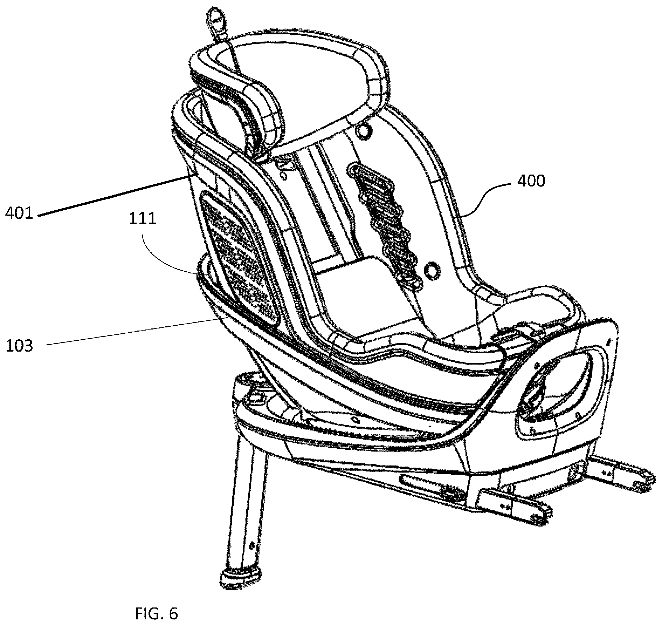

Figure 5 shows an alternative toddler car seat 400, and Figure 6 that car seat 400 installed in the base 100. The car seat comprises a seat body 401. The seat body 401 comprises an installation channel 402 in which securing means 403 are located. This car seat is larger - a "toddler" seat - for larger children (group 1, up to 18 kg). However, the base and the annular member work in the same way - the annular member 103 surrounds the seat 400 leaving a gap 111 to allow the annular member 103 to flex in the event of a crash.

## Claims

1. A car seat system comprising:
a base (100) for a car seat (200) comprising a lower part (101) adapted to rest on a vehicle seat cushion; and an upper part (102) rotatably mounted to the lower part (101), wherein the upper part (102) is shaped to define a void (110) in which a car seat (200) can be received, the upper part (102) comprising a support part (112a, 112b), an annular member (103) supported by the support part (112a, 112b) and surrounding the void (110) and connection means (104) on the support part (112a, 112b); and
a car seat (200) received in the void (110), comprising securing means (204), in which the connection means (104) are adapted for engagement with the securing means (204) and the securing means (204) are engaged with the connection means (104),
in which the connection means (104) of the upper part (102) of the base (100) is configured so that upon engagement with the securing means (204) of the car seat (200), the car seat (200) is locked in a fixed position within the void (110) of the upper part (102) of the base (100), with the fixed position being such that there is a gap between the annular member (103) and the car seat (200).

2. The car seat system of claim 1, in which the annular member (103) surrounds the car seat (200) when it is received within the void (110).

3. The car seat system of claim 1 or claim 2, in which the annular member (103) comprises a circumference with the annular member (103) being supported on the support part (112a, 112b) only by a plurality of supports spaced around the circumference.

4. The car seat system of claim 3, in which the connection means (104) defines a forwards/backwards direction of the car seat (200); the annular member (103) has two extremes in the forwards/backwards direction, and a support is provided at each extreme.

5. The car seat system of claim 3 or claim 4, in which the annular member (103) is curved between the supports.

6. The car seat system of any preceding claim, in which the lower part (101) lies in a first plane, and the annular member (103) lies in a second plane, the first plane forming a non-zero angle with the second plane.

7. The car seat system of claim 6 in which the angle is at least 5, 10 or 15 degrees.

## Patentansprüche

1. Kindersitzsystem, umfassend:
eine Basis (100) für einen Kindersitz (200), die einen unteren Teil (101), der dazu geeignet ist, auf einem Fahrzeugsitzkissen zu liegen; und einen oberen Teil (102), der drehbar an dem unteren Teil (101) montiert ist, umfasst, wobei der obere Teil (102) dazu gestaltet ist, einen Hohlraum (110) zu definieren, in dem ein Kindersitz (200) aufgenommen werden kann, wobei der obere Teil (102) ein Stützteil (112a, 112b), ein ringförmiges Element (103), das von dem Stützteil (112a, 112b) abgestützt wird und den Hohlraum (110) umgibt, und Verbindungsmittel (104) an dem Stützteil (112a, 112b) umfasst; und
einen Kindersitz (200), der in dem Hohlraum (110) aufgenommen ist und Sicherungsmittel (204) umfasst, wobei die Verbindungsmittel (104) zum Eingriff mit den Sicherungsmitteln (204) geeignet sind, und die Sicherungsmittel (204) mit den Verbindungsmitteln (104) in Eingriff gebracht werden,
wobei die Verbindungsmittel (104) des oberen Teils (102) der Basis (100) derart konfiguriert sind, dass wenn die Sicherungsmittel (204) des Kindersitzes (200) in Eingriff gebracht werden, der Kindersitz (200) in einer festen Position innerhalb des Hohlraums (110) des oberen Teils (102) der Basis) verriegelt ist, wobei die feste Position derart ist, dass eine Lücke zwischen dem ringförmigen Element (103) und dem Kindersitz (200) besteht.

2. Kindersitzsystem nach Anspruch 1, wobei das ringförmige Element (103) den Kindersitz (200) umgibt, wenn er innerhalb des Hohlraums (110) aufgenommen ist.

3. Kindersitzsystem nach Anspruch 1 oder Anspruch 2, wobei das ringförmige Element (103) einen Umfang umfasst, wobei das ringförmige Element (103) an dem Stützteil (112a, 1112b) nur von einer Vielzahl von Stützen, die um den Umfang herum beabstandet sind, abgestützt wird.

4. Kindersitzsystem nach Anspruch 3, wobei die Verbindungsmittel (104) eine Vorwärts-/ Rückwärtsrichtung des Kindersitzes (200) definieren; das ringförmige Element (103) zwei Enden in der Vorwärts-/Rückwärtsrichtung aufweist, und eine Stütze an jedem Ende bereitgestellt wird.

5. Kindersitzsystem nach Anspruch 3 oder Anspruch 4, wobei das ringförmige Element (103) zwischen den Stützen gekrümmt ist.

6. Kindersitzsystem nach einem der vorhergehenden Ansprüche, wobei der untere Teil (101) in einer ersten Ebene liegt und das ringförmige Element (103) in einer zweiten Ebene liegt, wobei die erste Ebene einen Winkel ungleich Null mit der ersten Ebene bildet.

7. Kindersitzsystem nach Anspruch 6, wobei der Winkel mindestens 5, 10 oder 15 Grad beträgt.

## Revendications

1. Système de siège pour enfant, comprenant :
une base (100) pour un siège pour enfant (200) comprenant une partie inférieure (101) adaptée pour reposer sur un coussin de siège de véhicule ; et une partie supérieure (102) montée en rotation sur la partie inférieure (101), dans lequel la partie supérieure (102) est façonnée pour définir un espace vide (110) dans lequel un siège pour enfant (200) peut être reçu, la partie supérieure (102) comprenant une partie de support (112a, 112b), un élément annulaire (103) supporté par la partie de support (112a, 112b) et entourant l'espace vide (110) et des moyens de connexion (104) sur la partie de support (112a, 112b) ; et
un siège pour enfant (200) reçu dans l'espace vide (110), comprenant des moyens de sécurisation (204), dans lequel les moyens de connexion (104) sont adaptés pour une mise en prise avec les moyens de sécurisation (204), et les moyens de sécurisation (204) sont mis en prise avec les moyens de connexion (104),
dans lequel les moyens de connexion (104) de la partie supérieure (102) de la base (100) sont configurés de telle sorte qu'à la mise en prise avec les moyens de sécurisation (204) du siège pour enfant (200), le siège pour enfant (200) est verrouillé dans une position fixe à l'intérieur de l'espace vide (110) de la partie supérieure (102) de la base (100), la position fixe étant telle qu'il existe un écart entre l'élément annulaire (103) et le siège pour enfant (200).

2. Système de siège pour enfant selon la revendication 1, dans lequel l'élément annulaire (103) entoure le siège pour enfant (200) lorsqu'il est reçu à l'intérieur de l'espace vide (110).

3. Système de siège pour enfant selon la revendication 1 ou la revendication 2, dans lequel l'élément annulaire (103) comprend une circonférence, l'élément annulaire (103) étant supporté sur la partie de support (112a, 112b) uniquement par une pluralité de supports espacés autour de la circonférence.

4. Système de siège pour enfant selon la revendication 3, dans lequel les moyens de connexion (104) définissent une direction vers l'avant/l'arrière du siège pour enfant (200) ; l'élément annulaire (103) présente deux extrémités dans la direction vers l'avant/l'arrière, et un support est fourni à chaque extrémité.

5. Système de siège pour enfant selon la revendication 3 ou la revendication 4, dans lequel l'élément annulaire (103) est courbe entre les supports.

6. Système de siège pour enfant selon l'une quelconque des revendications précédentes, dans lequel la partie inférieure (101) se trouve dans un premier plan, et l'élément annulaire (103) se trouve dans un deuxième plan, le premier plan formant un angle différent de zéro avec le deuxième plan.

7. Système de siège pour enfant selon la revendication 6, dans lequel l'angle est d'au moins 5, 10 ou 15 degrés.
